# EUROPEAN PATENT APPLICATION

(11) **EP 1 895 308 A1**
(43) Date of publication of application: **05.03.2008**
(21) Application number: 06119973.3
(22) Date of filing: 01.09.2006
(51) Int. Cl.: G01N 35/10, B01L 3/00, B01L 3/02

(54) **Droplet-based fluidic coupling**

(71) Applicant: Agilent Technologies, Inc., Santa Clara, CA 95051 (US)
(72) Inventor: Bek, Fritz, 76327, Pfinztal (DE); Gassmann, Marcus, 76227, Karlsruhe (DE)
(74) Representative: Barth, Daniel Mathias

(57) **Abstract**

A fluid supply unit is described, with the fluid supply unit comprising a fluid dispenser (7) with an orifice (8) adapted for dispensing a fluid. The fluid supply unit is adapted for establishing a fluidic contact between a droplet (11) formed at the fluid dispenser's orifice and an inlet port (6) of a microfluidic device (1).

## Description

### BACKGROUND ART

The present invention relates to a fluid supply unit, to a microfluidic device, and to a method of supplying a fluid to a microfludic device.

### DISCLOSURE

It is an object of the invention to provide an improved fluid supply unit for supplying a fluid to a microfluidic device. The object is solved by the independent claim(s). Further embodiments are shown by the dependent claim(s).

A fluid supply unit according to embodiments of the present invention comprises a fluid dispenser with an orifice adapted for dispensing a fluid. The fluid supply unit is adapted for establishing a fluidic contact between a droplet formed at the fluid dispenser's orifice and an inlet port of a microfluidic device.

According to embodiments of the present invention, a droplet of fluid is formed at the fluid dispenser's orifice, and when the droplet gets in touch with the inlet port of a microfluidic device, fluidic contact between the droplet and the inlet port is established. By making the droplet adhere to the inlet port, fluids like e.g. solvents, fluid samples, buffer solutions can be supplied to the inlet port.

In prior art solutions, the microfluidic device comprised a number of wells, with a fluids being supplied to a respective one of these wells. In order to avoid carry over, the number of fluids to be processed has often been limited by the number of wells.

According to embodiments of the present invention, droplet-based fluidic coupling is used for supplying fluids to a microfluidic device. Here, carry over is not a problem, because both the fluid dispenser and the surface area around the inlet port can easily be rinsed, in order to remove traces of fluids that have been supplied earlier. Using droplet-based fluidic coupling, the amount of dead volume in the fluid supply flow path is significantly reduced. As a consequence, carry over is no longer a problem.

Droplet-based fluidic coupling, might e.g. be used for consecutively supplying a large number of different fluids to an inlet port of a microfluidic device. Thus, a single microfluidic chip may perform a large number of different processing tasks before it has to be replaced, and the price per measurement may be considerably reduced.

The concept of droplet-based coupling is well-suited for microfluidic systems, because only a small volume of fluid is required. This is particularly advantageous when analysing valuable samples.

Another advantage is that the tasks of supplying a droplet of fluid to the inlet port of a microfluidic chip, processing the fluid, and removing the droplet may be carried out in an automated manner. Embodiments of the present invention provide a contribution to automated handling and processing of large numbers of different fluids. For example, the fluid supply unit according to embodiments of the present invention might cooperate with an auto sampler unit capable of supplying well-defined volumes of various different fluids.

According to a preferred embodiment, the fluid supply unit comprises a positioning unit, with the fluid dispenser being mounted to the positioning unit. Thus, the fluid dispenser can be moved relative to the microfluidic device. For example, the positioning unit might be used for moving the fluid dispenser's orifice to a well-defined position relative to the inlet port before establishing fluidic contact between the droplet and the inlet port. Furthermore, the positioning unit might e.g. be used for moving the fluid dispenser to a flush position, in order to flush the fluid dispenser with solvent or new sample. In case the microfluidic device comprises several inlet ports, the positioning unit might e.g. be used for driving the fluid dispenser to a selected inlet port. The movements and positioning operations performed by the positioning unit might e.g. be specified by using some kind of programming language, in order to realize an automatic operation of the fluid supply unit.

In a preferred embodiment, the inlet port is located at one of the faces of the microfluidic device.

In a further preferred embodiment, the inlet port is formed by an inlet channel that extends to one of the faces of the microfluidic device. Preferably, the width and the height of the inlet port correspond to the width and the height of the inlet channel. The sample supply flow path does not comprise any fluid reservoirs or wells. Hence, the amount of dead volume is considerably reduced, and due to the reduced dead volume, sample carry over is reduced. After a droplet of fluid sample has adhered to the inlet port, sample compounds may be directly supplied to the inlet channel.

According to a preferred embodiment, the positioning unit is adapted for moving the fluid dispenser to a position vis-a-vis the inlet port, with the fluid dispenser's orifice being aligned with the inlet port. Thus, it is made sure that a droplet formed at the fluid dispenser's orifice will get in contact with the inlet port.

There exist two different possibilities for establishing fluidic contact between the droplet and the inlet port. According to a first embodiment, the fluid dispenser is moved to a position vis-a-vis the inlet port, at a predefined distance from the inlet port. Then, a droplet is formed at the fluid dispenser's orifice. By further supplying fluid to the orifice, the size of the droplet is continuously increased until the droplet gets in contact with the inlet port. Now, the droplet adheres both to the fluid dispenser and to the microfluidic device and bridges the gap between the fluid dispenser's orifice and the inlet port. When fluidic contact is established, supply of fluid to the fluid dispenser is stopped. This first embodiment allows for a precise control of the fluidic coupling between the droplet and the microfluidic device.

According to a second embodiment of the invention, fluidic contact between a droplet adhering to the fluid dispenser's orifice and the microfluidic device is established by forming a droplet at the fluid dispenser's orifice, and by moving the fluid dispenser in the direction towards the inlet port until the droplet gets in touch with the inlet port. When the droplet adheres both to the fluid dispenser and the microfluidic device, the forward movement is stopped. In this second embodiment, droplet formation precedes the movement of the fluid dispenser in the direction towards the inlet port.

According to a further preferred embodiment, charged compounds in the droplet are electrokinetically moved from the droplet to the inlet port and into the inlet channel. The fluid itself is not drawn into the inlet channel, but the charged compounds dissolved in the fluid are conveyed towards the inlet channel.

In a preferred embodiment, at least one of a voltage or a current is applied between the fluid dispenser and the fluid in the inlet channel. As a result, charged compounds in the droplet are subjected to an electric field that moves them in the direction towards the inlet port. The charged compounds in the fluid are electrokinetically moved to the microfluidic device's inlet channel.

In a preferred embodiment, the fluid dispenser comprises a first electrode adapted for contacting the droplet formed at the fluid dispenser's orifice. Further preferably, the microfluidic device comprises a second electrode adapted for contacting the fluid in the inlet channel of the microfluidic device. Further preferably, at least one of a voltage or a current is applied between the first electrode and the second electrode. Thus, an electric field is generated, the electric field being adapted for moving charged compounds from the droplet towards the inlet channel of the microfluidic device.

According to a preferred embodiment, the fluid supply unit is adapted for detecting when the droplet formed at the fluid dispenser's tip gets in fluidic contact with the inlet port of the microfluidic device. In a further preferred embodiment, the fluid supply unit comprises a detection unit adapted for detecting an electrical property indicating fluidic contact between the droplet and the inlet port. For example, the detection unit might be adapted for detecting the onset of a current related to charged compounds moving from the droplet to the inlet channel. Alternatively, the detection unit might e.g. be adapted for determining one of AC conductivity, DC conductivity, AC resistance, DC resistance.

In a further preferred embodiment, the detection unit is connected to a first electrode electrically coupled with the droplet and to a second electrode electrically coupled with the fluid in the inlet channel. Further preferably, the detection unit is connected between the above-described first and second electrode.

In a further preferred embodiment, the electrical property determined by the detection unit is used for controlling operation of the fluid supply unit. For example, if fluidic contact between the droplet and the inlet port is established by continuously increasing the size of the droplet, supply of further fluid might be stopped as soon as the droplet has adhered to the microfluidic device's inlet port. For example, a metering device fluidically coupled with the fluid dispenser's orifice might be controlled in accordance with the electrical property determined by the detection unit.

Alternatively, if fluidic contact between the droplet and the inlet port is established by moving the fluid dispenser in the direction towards the microfluidic device, the forward movement of the fluid dispenser might be stopped as soon as the droplet has touched the microfluidic device's inlet port. For example, in this embodiment, the positioning unit might be controlled in accordance with the electrical property determined by the detection unit.

According to a preferred embodiment, a metering device is fluidically connected to the fluid dispenser. The metering device is capable of precisely metering a volume of fluid. For example, by controlling the piston movement of the metering device, a well-defined volume of fluid may be supplied to the fluid dispenser. For example, the metering device might supply a volume of fluid required for forming a droplet of fluid at the fluid dispenser's orifice. In a preferred embodiment, the fluid supplied to the fluid dispenser is one of: a solvent, a fluid sample, a buffering solution.

According to an alternative embodiment, the fluid supply unit comprises a piston pump fluidically connected to the fluid dispenser. A piston pump is capable of supplying a volume of fluid with the required accuracy.

In a further preferred embodiment, an auto-sampling unit capable of supplying a plurality of different fluids is fluidically connected to the fluid dispenser. The auto-sampling unit might e.g. comprise a plurality of wells filled with different fluids, with the auto-sampling unit being adapted for selecting one of the plurality of different fluids, for aspirating the respective fluid, and for supplying a well-defined volume of said fluid to the fluid dispenser. The fluids might e.g. comprise one or more of fluid samples, solvents, buffer solutions. In a preferred embodiment, the fluid dispenser is flushed before supplying a droplet of fluid sample to an inlet port of a microfluidic device. By flushing the fluid dispenser, traces of former samples are removed.

According to further preferred embodiments, the inlet port of the microfluidic device is either located at a side face of the microfluidic device, or at the top surface of the microfluidic device. In a further preferred embodiment, the microfluidic device comprises a throughhole extending from the top surface to the bottom surface, with an inlet channel extending into the throughhole. Preferably, the dimensions of the throughhole are chosen such that a droplet supplied to the throughhole is held by adhesive forces. Now, charged compounds in the droplet may be electrokinetically transported into the inlet channel.

In a further preferred embodiment, the microfluidic device comprises a plurality of inlet ports. For example, by supplying different fluid samples to different inlet ports, problems related to carry over can be reduced.

According to a preferred embodiment, the inlet port of the microfluidic device is enclosed by a hydrophilic surface patch. When a droplet of aqueous solution gets in fluidic contact with the surface patch, the aqueous solution wets the surface patch. Hence, the hydrophilic surface patch defines the area where the droplet adheres to the microfluidic device. In a further preferred embodiment, the hydrophilic surface patch is surrounded by a ring-shaped hydrophobic region. Aqueous solution does not adhere to the hydrophobic surface region. The ring-shaped hydrophobic region is helpful for defining the spot where the droplet adheres to the microfluidic device. In a further preferred embodiment, at least one of the hydrophilic region and the hydrophobic region is created by subjecting a surface of the microfluidic device to some kind of surface treatment. The surface treatment might e.g. comprise plasma treatment, treatment with chemicals, treatment with silanes, treatment with fluorine agents, etc.

In a preferred embodiment, the microfluidic device comprises a separation system adapted for separating compounds of a fluid sample, with the fluid sample being supplied via the inlet channel. Further preferably, the separation system is an electrophoresis system adapted for electrophoretically separating charged compounds according to their respective mobilities. For example, charged compounds introduced via droplet-based coupling may be electrokinetically moved to an injection point of the electrophoretic separation system. Then, the charged compounds are separated according to their respective mobilities.

In a further preferred embodiment, the microfluidic device is adapted for performing an isotachophoretic separation of a sample's compounds. In isotachophoretic separation, an enrichment of sample compounds is accomplished by consecutively supplying different buffer solutions with different conductivities to the separation system. Droplet-based fluidic coupling according to embodiments of the present invention is well-suited for consecutively supplying different buffer solutions to the separation system.

A microfluidic device according to embodiments of the present invention comprises an inlet channel extending to one of the faces of the microfluidic device, thereby forming an inlet port, with the dimensions of the inlet port corresponding to the dimensions of the inlet channel.

The microfluidic device according to embodiments of the present invention does not comprise any wells or sample reservoirs. Using droplet-based fluidic coupling, compounds of a fluid are directly supplied to the inlet channel of the microfluidic device. Hence, the amount of dead volume in the fluid supply flow path is reduced.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied for controlling the task of establishing fluidic contact between the droplet and the inlet port of the microfluidic device.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Fig. 1 shows a microfluidic device with an inlet channel;

Fig. 2 depicts a droplet of sample formed at a fluid dispenser's orifice;

Fig. 3 shows a droplet of sample adhering both to the fluid dispenser's orifice and to an inlet port of a microfluidic device;

Fig. 4 shows a positioning unit adapted for positioning the fluid dispenser relative to a microfluidic device;

Fig. 5 illustrates operation of an auto sampler unit;

Fig. 6 shows an embodiment with a droplet being supplied to a top face of the microfluidic device;

Fig. 7 illustrates how a droplet adhering to the walls of a through hole can be removed;

Fig. 8 shows a side face of a microfluidic chip with a hydrophilic region surrounding the inlet port;

Fig. 9 illustrates a fluid dispenser supplying fluid sample to an electrophoresis chip;

Fig. 10 shows the electrical currents applied to the electrodes of the fluid supply system;

Fig. 11 illustrates another embodiment of the present invention; and

Fig. 12 shows how the tasks of supplying sample droplets and electrically contacting the sample droplets may be carried out consecutively.

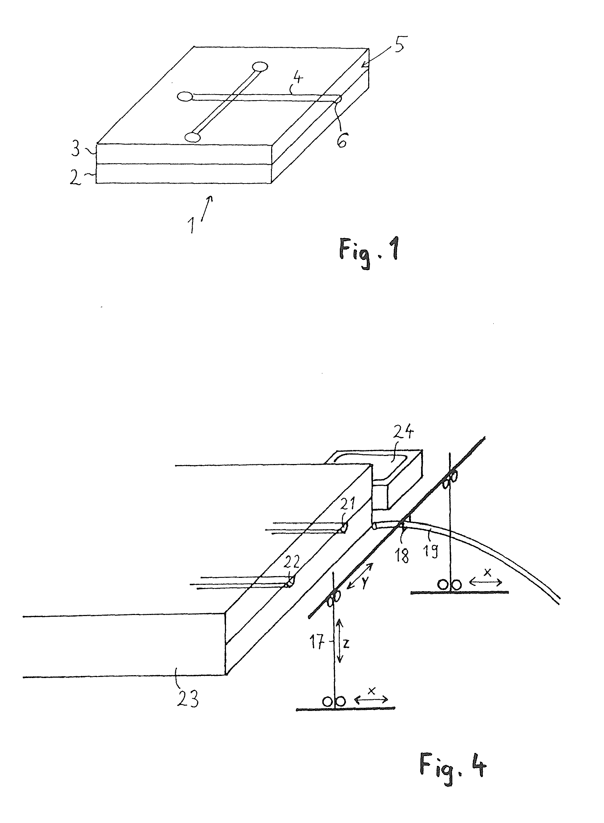

Fig. 1 shows a microfluidic device adapted for analyzing compounds of a fluid sample. The microfluidic device 1 might e.g. be made of several layers 2, 3, with each layer having a thickness between 0.1 mm and 2 mm. The layers might e.g. be made of glass, or of materials like PMMA (polymethyl methacrylate) or PEEK (polyetheretherketone). The layers are microstructured using techniques like e.g. hot embossing, laser ablation, micromolding, etching, etc., and then, the layers are bonded, in order to form the microfluidic device 1. The microfluidic device 1 comprises at least one inlet channel 4. Via the inlet channel 4, fluid sample can be supplied to the microfluidic device 1 for further analysis. According to embodiments of the present invention, the inlet channel 4 extends to a face 5 of the microfluidic device, thereby forming an inlet port 6. The dimensions of the inlet port 6 correspond to the inlet channel's cross section. For example, the inlet port 6 might have a width of 40 µm and a height of 15 µm.

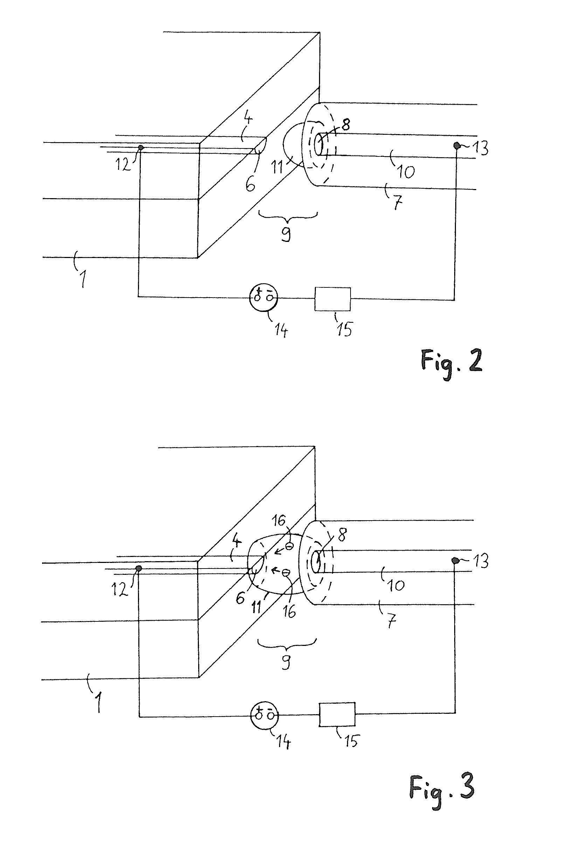

Figs. 2 and 3 illustrate how fluid sample is supplied to the inlet channel 4 of the microfluidic device 1. A fluid dispenser 7 is brought to a well-defined position relative to the inlet port 6, with the fluid dispenser's orifice 8 facing the inlet port 6. The distance 9 between the orifice 8 and the inlet port 6 is in the range between 0.1 mm and 1 mm. The fluid dispenser 7 comprises a supply channel 10, which might e.g. be fluidically coupled with a sample supply unit. The fluid dispenser 7 might e.g. be a capillary made of glass or quartz, with the capillary's inner diameter ranging from 50 µm to 250 µm, and with the capillary's outer diameter being approximately equal to 360 µm. A fluid sample is supplied via the supply channel 10, and a sample droplet 11 is formed at the orifice 8 of the fluid dispenser 7. The sample droplet 11 adheres to the tip of the fluid dispenser 7.

The inlet channel 4 is filled with buffer solution. The microfluidic device 1 comprises a first electrode 12, the first electrode 12 being in fluidic contact with the buffer solution in the inlet channel 4. The fluid dispenser 7 comprises a second electrode 13, the second electrode 13 being in fluidic contact with the fluid sample in the supply channel 10. Both the first electrode 12 and the second electrode 13 are connected to a voltage supply 14. The voltage supply 14 is adapted for applying a voltage between the buffer solution in the inlet channel 4 and the fluid sample in the supply channel 10.

The set-up further comprises a detection unit 15 adapted for detecting an electrical property, like e.g. resistance, conductivity, resistance, etc. In the embodiment shown in Fig. 2A, the detection unit 15 is adapted for detecting a current flowing between the first electrode 12 and the second electrode 13. The detection unit 15 is connected in series with the voltage source 14. As long as the droplet 11 of fluid sample is not in contact with the inlet port 6 yet, no current is flowing.

By continuously supplying fluid sample to the orifice 8, the size of the droplet 11 is continuously increased. The fluid sample might e.g. be supplied by a fluid supply unit fluidically connected to the supply channel 10. As the droplet 11 becomes bigger and bigger, it touches the inlet port 6.

This situation is depicted in Fig. 3. The droplet 11, which might e.g. have a size of 0.2 µl to 0.5 µl, adheres both to the inlet port 6 and to the tip of the fluid dispenser 7. The droplet 11 bridges the gap between the inlet channel 4 and the supply channel 10. Via the droplet 11, the buffer solution in the inlet channel 4 is fluidically coupled with the fluid sample in the supply channel 10.

When applying a voltage between the electrodes 12 and 13, an electric field is set up, and charged compounds of the fluid sample in the droplet 11 are electrokinetically moved by the electric field. For example, if the first electrode 12 is set to a positive potential relative to the second electrode 13, negatively charged compounds 16, like e.g. negatively charged DNA fragments, are electrokinetically moved towards the inlet port 6. Thus, charged compounds are electrokinetically transported into the microfluidic device 1. There, these compounds might e.g. be subjected to further analysis. As soon as the droplet 11 adheres to the microfluidic device 1 and establishes a fluidic contact between the inlet channel 4 and the supply channel 10, the ion current between the electrodes 12 and 13 starts flowing. The onset of this current may be detected by the detection unit 15. The detection unit 15 is capable of detecting the point of time when fluidic contact between the droplet 11 and the inlet port 6 is established. Instead of current, the detection unit 15 might as well be adapted for monitoring conductivity or resistance.

In a first embodiment, the position of the fluid dispenser relative to the microfluidic device is fixed. In this embodiment, fluidic contact between the droplet and the inlet channel is established by increasing the size of the droplet until the droplet gets in contact with the inlet port. In an alternative embodiment, the fluid dispenser is mounted on a positioning unit, with the positioning unit being adapted for positioning the fluid dispenser relative to the microfluidic device. In this embodiment, fluidic contact between the droplet formed at the fluid dispenser's orifice and the inlet port is established by moving the fluid dispenser in the direction towards the inlet port and/or by increasing the size of the droplet.

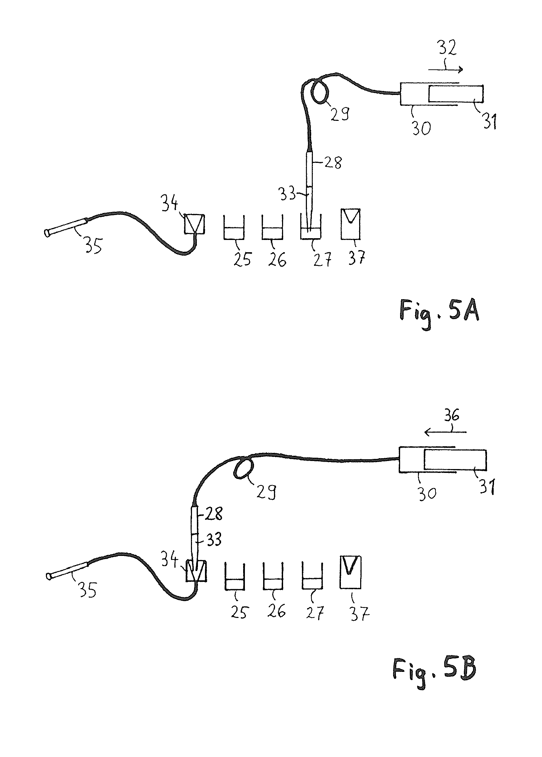

Fig. 4 shows a positioning unit 17 with a support member 18. Fluid dispenser 19 is mounted to the support member 18. The fluid dispenser 19 is fluidically coupled with a supply unit, which might e.g. be a metering device, a piston pump, an auto sampler unit, etc. The positioning unit 17 comprises actuation devices for moving the fluid dispenser 19 in the x-, y- and z-direction. Preferably, the actuation devices comprise stepper motors.

The positioning unit 17 is adapted for adjusting the position of the fluid dispenser 19 relative to one or more inlet ports 21, 22 of a microfluidic device 23. For example, for supplying a sample to inlet port 21, the fluid dispenser's orifice is moved to a position vis-a-vis the inlet port 21. Then, a droplet is formed at the fluid dispenser's orifice, and the size of the droplet is increased until it bridges the gap between the fluid dispenser 19 and the inlet port 21. Now, charged compounds of the sample can be electrokinetically moved into the inlet port 21.

The set-up shown in Fig. 4 can be used for consecutively analyzing different samples. Before supplying a new sample to any of the inlet ports 21, 22, remaining amounts of the former sample have to be removed. For this purpose, the fluid dispenser 19 is driven to a waste reservoir 24, and there, the fluid dispenser 19 is flushed with solvent or with new sample. The fluid dispenser's internal volume might e.g. be 1.5 µl to 2 µl, and therefore, a flush volume of 30 µl to 50 µl will be sufficient for removing remaining traces of former sample. Furthermore, the set-up might comprise equipment for cleaning the side face of the microfluidic device 23.

After traces of former samples have been removed, new sample may be supplied to one of the inlet ports 21, 22 of the microfluidic device 23. The positioning unit 17 moves the fluid dispenser 19 from the waste reservoir 24 to a position vis-a-vis the respective inlet port. The supply unit supplies the new sample to the fluid dispenser 19, thereby forming a droplet at the fluid dispenser's orifice. As the droplet gets bigger, fluidic contact between the droplet and the respective inlet port is established. Now, compounds of the new sample may be supplied to the respective inlet port.

The supply unit might e.g. be a piston pump, a metering device, an auto sampler unit, etc. Figs. 5A and 5B illustrate the operation of an auto sampler unit. The auto sampler unit might comprise a plurality of vessels 25, 26, 27, each vessel being filled with a particular sample or solvent. Alternatively, the auto sampler unit might comprise a well plate with a plurality of wells containing different solvents and samples. For aspirating a particular sample, a needle 28 is moved to a vessel 26 containing the respective sample. The needle 28 may be attached to a positioning device. The needle 28 is fluidically coupled, via a loop 29, with a metering device 30. By moving the piston 31 of the metering device in the direction indicated by arrow 32, a volume 33 of solvent or sample is aspirated.

After a respective sample or solvent has been drawn into the needle 28, the needle 28 is moved to a needle seat 34, as shown in Fig. 5B. The needle seat 34 is fluidically coupled with a fluid dispenser 35. The piston 31 of the metering device 30 is moved in the direction indicated by arrow 36, and the volume 33 of sample or solvent is injected into the needle port 34. Movement of piston 31 is continued, and the volume 33 of sample or solvent is transported to the fluid dispenser 35, which might e.g. be realized as a glass capillary or a quartz capillary. When the volume 33 arrives at the fluid dispenser's orifice, a droplet is formed at the orifice, and the respective sample or solvent can be supplied to an inlet port of a microfluidic device.

During operation of the auto sampler unit, it might become necessary to rinse the needle 28. For this purpose, the auto sampler unit comprises a flush port 37 adapted for rinsing the needle 28.

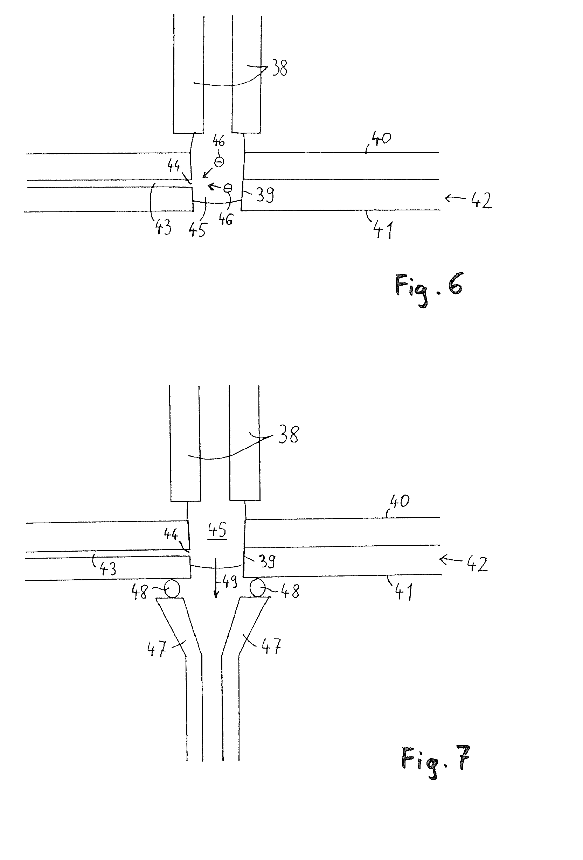

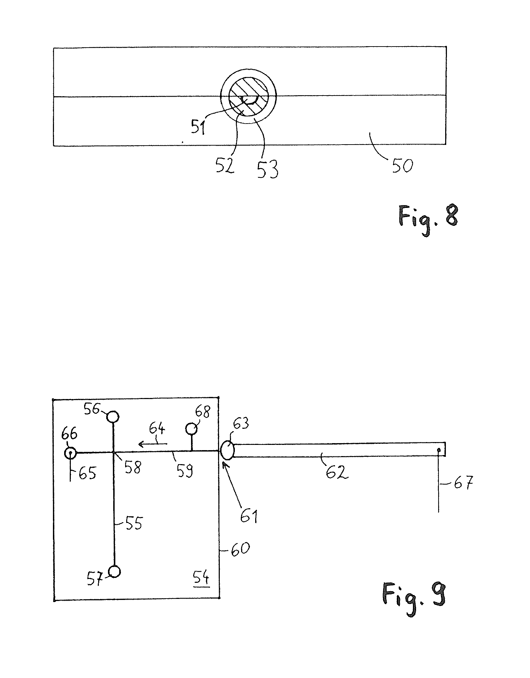

In the embodiments that have been discussed so far, the droplet of fluid sample has been supplied to an inlet port located at a side face of the microfluidic device. Figs. 6 and 7 illustrate an alternative embodiment where the droplet of fluid sample is supplied to a top surface of the microfluidic device. A fluid dispenser 38 is moved to a position right above a through hole 39, the through hole 39 extending from the top surface 40 to the bottom surface 41 of a microfluidic device 42. An inlet channel 43 of the microfluidic device 42 extends to the through hole 39, thereby forming an inlet port 44. For supplying fluid sample to the microfluidic device 42, a droplet 45 of fluid sample is formed at the orifice of the fluid dispenser 38. The droplet 45 adheres to the side walls of the through hole 39. Preferably, the inner diameter of the through hole 39 is in the range between 0.3 mm and 0.8 mm. In order to keep the droplet 45 at its position and enhance adhesion, the side walls of the through hole 39 might e.g. be bevelled. By applying a voltage between the fluid in the fluid dispenser 38 and the fluid in the inlet channel 43, charged sample compounds 46 are electrokinetically moved into the inlet channel 43.

The embodiments of the present invention are capable of consecutively supplying different samples to a microfluidic device. However, before a droplet of new sample can be supplied to the through hole 39, the droplet 45 of former sample has to be removed. In Fig. 7, removal of the droplet 45 of former sample is illustrated. A suction nozzle 47 adapted for applying low pressure is pressed against the lower surface 41 of the microfluidic device 42. For accomplishing a tight coupling, the suction nozzle 47 might comprise a sealing gasket 48. By applying a low pressure, the droplet 45 is moved in the direction indicated by arrow 49. Thus, the droplet 45 is removed. Next, the fluid dispenser 38 might supply a flow of flush solvent and rinse the through hole 38, in order to reduce carry over. Then, a droplet of new sample may be supplied.

Fig. 8 shows a face 50 of a microfluidic device with an inlet port 51. The inlet port 51 is surrounded by a hydrophilic region 52. Furthermore, the hydrophilic region 52 might e.g. be surrounded by a ring-shaped hydrophobic region 53. A droplet of aqueous sample that gets in touch with the hydrophilic region 52 adheres to the hydrophilic region 52 and is repelled from the hydrophobic region 53. Adhesion of the droplet is confined to the hydrophilic region 52. A droplet of fluid sample solely adheres to the hydrophilic region 52. Thus, the droplet is automatically brought to an optimum position relative to the inlet port 51.

The surface structure shown in Fig. 8 can be produced by subjecting the face 50 of the microfluidic device to a surface treatment. For example, if the microfluidic device is made of glass, the chip's surface is hydrophilic. In this case, the ring-shaped hydrophobic region 53 might e.g. be produced by exposing this region to a plasma treatment, to a treatment with reactive agents, to a treatment with silanes or fluorine compounds, etc.

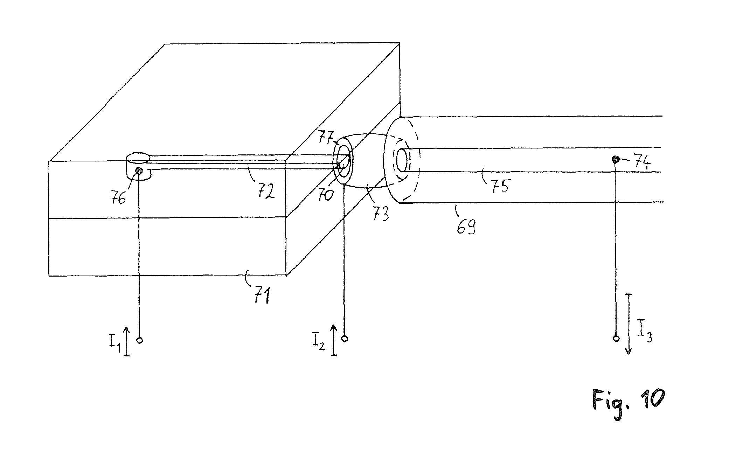

Fig. 9 shows how droplet-based coupling can be used for supplying fluid sample to an electrophoresis chip 54. The electrophoresis chip 54 comprises an electrophoretic separation column 55 that extends from an upper well 56 to a lower well 57. The separation column 55 is filled with gel, preferably with polyacrylamid gel. At an injection point 58, the separation column 55 is fluidically coupled with an injection channel 59. The injection channel 59 is adapted for injecting a fluid sample into the separation channel 55. The injection channel 59 extends to a side face 60 of the electrophoresis chip 54, thereby forming an inlet port 61.

For supplying a fluid sample to the electrophoresis chip 54, a capillary 62 is moved to a position right next to the inlet port 61, and a droplet 63 is formed at the capillary's outlet. The size of the droplet 63 is increased until it adheres to a surface region around the inlet port 61, thereby establishing a fluidic contact with the fluid in the injection channel 59.

The set-up shown in Fig. 9 comprises a first electrode 65 located at a well 66, the well 66 being fluidically coupled with the injection channel 59. The first electrode is adapted for electrically contacting the fluid in the injection channel 59. The set-up further comprises a second electrode 67 for electrically contacting the fluid sample in the capillary 62. By applying a voltage between the first electrode 65 and the second electrode 67, charged compounds contained in the droplet 63 are electrokinetically moved towards the well 66, as indicated by arrow 64. The voltage might e.g. be in the range between 200 V and 12 kV.

As soon as the charged compounds have passed the injection point 58, electrophoretic separation may be started. A potential difference is applied between a third electrode located in the upper well 56 and a fourth electrode located in the lower well 57. Driven by this potential difference, the charged sample compounds injected at the injection point 58 are conveyed through the separation channel 55. During their passage through the separation channel 55, the sample compounds are separated according to their respective mobilities. The electrophoresis chip 54 might further comprise a detection unit for detecting the arrival of the sample compounds after they have travelled through the separation channel 55.

The electrophoresis chip 54 might further comprise a well 68 fluidically coupled with the injection channel 59. The well 68 might contain a reference sample with one or more compounds having well-known electrophoretic properties. By supplying the reference sample to the separation channel 55, a calibration of the electrophoresis system can be performed.

Fig. 10 shows another embodiment of the present invention illustrating how currents may be applied to the set-up. A fluid dispenser 69 is positioned vis-a-vis an inlet port 70 of a microfluidic device 71. For supplying fluid sample to the inlet channel 72 of the microfluidic device 71, a droplet 73 of fluid sample is formed at the tip of the fluid dispenser 69. As the droplet 73 gets bigger, it adheres to a surface area around the inlet port 70 of the microfluidic device 71.

The fluid dispenser 69 comprises a first electrode 74 adapted for electrically contacting the fluid in the fluid dispenser's supply channel 75. In case the fluid dispenser 69 is fluidically coupled with an auto sampler unit, the auto sampler unit's needle seat (e.g. the needle seat 34 shown in Figs. 5A and 5B) might be used as a first electrode 74. The microfluidic device 71 comprises a second electrode 76 adapted for electrically contacting the fluid in the inlet channel 72.

In the embodiment shown in Fig. 10, the set-up further comprises a ring-shaped electrode 77 that surrounds the inlet port 70 of the microfluidic device 71. For moving negatively charged compounds into the inlet port 70, a current I₃ is withdrawn at the first electrode 74, and currents I₁ and I₂ are supplied to the second electrode 76 and the ring-shaped electrode 77. The magnitude of I₃ is equal to the sum of I₁ and I₂. As a consequence, negatively charged compounds in the droplet are driven towards the electrodes 76 and 77.

Due to this distribution of currents, negatively charged compounds located near the droplet's surface are attracted to the ring-shaped electrode 77, while negatively charged compounds located in the droplet's inner core are moved through the inlet port 70 and into the inlet channel 72.

Contaminations and dirt particles are mainly located at the droplet's surface. By applying currents as shown in Fig. 10, contaminations and dirt particles are moved towards the ring-shaped electrode 77, whereas sample compounds from the droplet's inner core are moved into the inlet channel 72. Hence, the ring-shaped electrode 77 is capable of efficiently removing contaminations and dirt particles. In fact, the sample compounds supplied to the inlet channel 72 are quite pure.

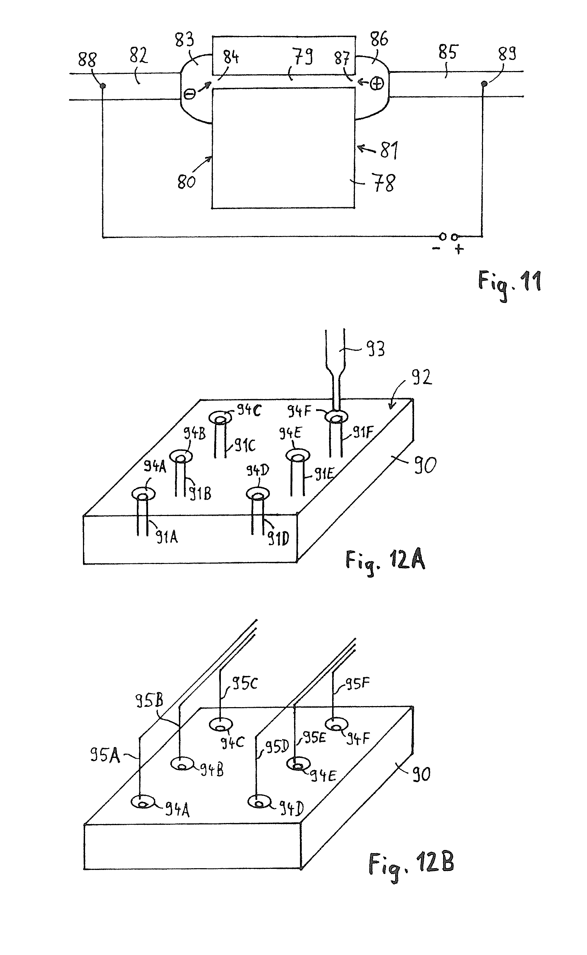

Fig. 11 shows yet another embodiment of the present invention. A microfluidic device 78 comprises a channel 79 extending from a first surface 80 to a second surface 81 of the microfluidic device 78. At the tip of a first fluid dispenser 82, a first droplet 83 of a first sample is formed. The first droplet 83 is brought in fluidic contact with a first inlet port 84. At the tip of a second fluid dispenser 85, a second droplet 86 of a second sample is formed, and the second droplet 86 is brought in fluidic contact with a second inlet port 87. Next, a voltage is applied between a first electrode 88 in the first fluid dispenser 82 and a second electrode 89 in the second fluid dispenser 85. As a consequence, negatively charged compounds of the first sample are moved from the first droplet 83 via the first inlet port 84 into the channel 79. Positively charged compounds are moved from the second droplet 86 via the second inlet port 87 into the channel 79. Negatively charged compounds and positively charged compounds are drawn into the channel 79 from opposite sides. The positively charged compounds and the negatively charged compounds are moved towards each other. This embodiment might e.g. be employed for initiating chemical reactions between positively and negatively charged compounds.

In the embodiments described so far, the fluid dispenser has been responsible both for supplying a droplet of fluid and for electrically contacting the droplet. However, as depicted in Figs. 12A and 12B, these two tasks may be carried out consecutively. For example, a microfluidic device 90 shown in Fig. 12A might comprise a plurality of inlet channels 91 A-91 F, with respective inlet ports being located at the upper surface 92 of the microfluidic device 90. A fluid dispenser 93 is adapted for depositing a plurality of sample droplets 94A-94F at the respective locations of the inlet ports.

Fig. 12B shows an array of electrodes 95A-95F that is moved onto the sample droplets 94A-94F after the sample droplets 94A-94F have been deposited. Each of the sample droplets 94A-94F is electrically contacted by a corresponding one of the electrodes 95A-95F. For example, electrode 95A contacts sample droplet 94A, electrode 95B contacts sample droplet 94B, etc. By applying a voltage between an electrode and a fluid in the corresponding inlet channel, charged sample compounds may be electrokinetically moved from a sample droplet into the corresponding inlet channel.

## Claims

1. A fluid supply unit comprising
a fluid dispenser (7) with an orifice (8) adapted for dispensing a fluid;
the fluid supply unit being adapted for establishing a fluidic contact between a droplet (11) formed at the fluid dispenser's orifice (8) and an inlet port (6) of a microfluidic device (1).

2. The fluid supply unit of claim 1, further comprising a positioning unit adapted for positioning the fluid dispenser's orifice relative to the inlet port of the microfluidic device.

3. The fluid supply unit of claim 1 or any one of the above claims, further comprising the microfluidic device,
with the microfluidic device comprising an inlet port located at one of the faces of the microfluidic device.

4. The fluid supply unit of claim 1 or any one of the above claims, wherein the microfluidic device comprises an inlet channel extending to one of the faces of the microfluidic device, thereby forming an inlet port,
with the dimensions of the inlet port corresponding to the dimensions of the inlet channel.

5. The fluid supply unit of claim 1 or any one of the above claims, wherein the positioning unit is adapted for aligning the fluid dispenser's orifice with the inlet port of the microfluidic device, with the orifice facing the inlet port.

6. The fluid supply unit of claim 1 or any one of the above claims, wherein the fluid supply unit is adapted for at least one of
• increasing the size of the droplet formed at the fluid dispenser's orifice and
• repositioning the fluid dispenser's orifice relative to the inlet port of the microfluidic device until the droplet adheres both and to the fluid dispenser's orifice and to the inlet port, thereby bridging the gap between the orifice and the inlet port.

7. The fluid supply unit of claim 1 or any one of the above claims, further comprising at least one of the features:
the positioning unit is adapted for positioning the fluid dispenser's orifice such that there is a predefined gap between the fluid dispenser's orifice and the inlet port;
the predefined gap between the fluid dispenser's orifice and the inlet port of the microfluidic device is in the range between 0.1 mm to 0.4 mm;
the fluid supply unit is adapted for increasing the size of the droplet formed at the fluid dispenser's orifice until the droplet adheres both to the fluid dispenser's orifice and to the inlet port, thereby bridging the gap between the orifice and the inlet port.

8. The fluid supply unit of claim 1 or any one of the above claims, further comprising at least one of the features:
the fluid supply unit is adapted for forming a droplet of predefined size that adheres to the fluid dispenser's orifice;
the positioning unit is adapted for moving the fluid dispenser's orifice towards the inlet port until the droplet adheres both to the fluid dispenser's orifice and to the inlet port, thereby bridging the gap between the orifice and the inlet port.

9. The fluid supply unit of claim 1 or any one of the above claims, comprising at least one of the features:
the fluid supply unit is adapted for electrophoretically moving charged compounds from the droplet towards the inlet port;
the microfluidic device comprises a first electrode electrically coupled with fluid in the microfluidic device;
the fluid dispenser comprises a second electrode electrically coupled with the droplet;
the fluid supply unit comprises a power supply adapted for applying at least one of a current and a voltage between the first electrode and the second electrode;
the applied voltage or the applied current is adapted for electrophoretically moving charged compounds from the droplet towards the inlet port.

10. The fluid supply unit of claim 1 or any one of the above claims, further comprising at least one of the features:
the fluid supply unit comprises a detection unit adapted for determining when the droplet gets in contact with the inlet port of the microfluidic device;
the detection unit is adapted for determining an electrical property measured between the droplet and fluid in the microfluidic device;
the electrical property is one of: current, AC conductivity, DC conductivity, AC resistance, DC resistance;
the detection unit is connected to an electrode located in the fluid dispenser and an electrode located in the microfluidic device;
the detection unit is adapted for detecting an onset of current when the droplet gets in contact with the inlet port of the microfluidic device;
operation of the fluid supply unit is controlled in dependence on the electrical property determined by the detection unit.

11. The fluid supply unit of claim 1 or any one of the above claims, comprising at least one of the features:
the fluid supply unit comprises a metering device fluidically coupled to the fluid dispenser;
the metering device is adapted for supplying one or more of solvent, buffer solution, fluid sample to the fluid dispenser;
the fluid supply unit comprises a piston pump fluidically coupled to the fluid dispenser;
the fluid supply unit comprises an auto sampling unit fluidically coupled to the fluid dispenser;
the auto sampling unit is adapted for selecting one of a plurality of different fluids contained in respective fluid reservoirs, for aspirating a respective fluid from a fluid reservoir, and for supplying the respective fluid to the fluid dispenser;
the fluids supplied by the auto sampling unit comprise one or more of: solvents, buffer solutions, fluid samples;
the fluid supply unit is adapted for flushing the fluid dispenser before dispensing another fluid.

12. The fluid supply unit of claim 1 or any one of the above claims, comprising at least one of the features:
the inlet port is located at a lateral surface of the microfluidic device;
the inlet port is located at a top surface of the microfluidic device;
the inlet port is realized as a throughhole extending from the top surface to the bottom surface of the microfluidic device, with the inlet channel being fludically coupled to the throughhole;
the microfludic device comprises a plurality of inlet ports.

13. The fluid supply unit of claim 1 or any one of the above claims, comprising at least one of the features:
the microfluidic device comprises a hydrophilic surface patch that surrounds the inlet port, with the droplet formed at the fluid dispenser's orifice being disposed to adhere to the hydrophilic surface patch;
the microfluidic device comprises a hydrophobic surface region that encloses the hydrophilic surface patch, with the droplet formed at the fluid dispenser's orifice not being disposed to adhere to the hydrophobic surface region;
at least one of the hydrophilic surface patch and the hydrophobic surface region is formed by subjecting a respective part of the microfluidic device's surface to a surface modification.

14. The fluid supply unit of claim 1 or any one of the above claims, comprising at least one of the features:
the microfluidic device is a microfluidic chip;
the microfluidic device comprises a separation system adapted for electrophoretically separating compounds of a fluid sample;
the microfluidic device is adapted for performing an isotachophoretic separation of a sample's compounds, with the fluid supply unit being capable of supplying different solutions;
the microfluidic device comprises an injection channel adapted for conveying a fluid from the inlet port to the separation system;
the microfluidic device is realized as a stack of microstructured layers;
the microfluidic device is made of one of: glass, plastic.

15. A microfluidic device (1) comprising
an inlet channel (4) extending to one of the faces (5) of the microfluidic device (1), thereby forming an inlet port (6),
with the dimensions of the inlet port (6) corresponding to the dimensions of the inlet channel (4).

16. A method of supplying a fluid to a microfluidic device (1), the method comprising:
dispensing a fluid at an orifice (8) of a fluid dispenser (7), thereby forming a droplet (11) that adheres to the fluid dispenser's orifice (8);
positioning a fluid dispenser's orifice (8) relative to an inlet port (6) of a microfluidic device (1), wherein the orifice (8) faces the inlet port (6) and the orifice (8) is substantially aligned with the inlet port (6);
establishing a fluidic contact between the droplet (11) formed at the fluid dispenser's orifice (8) and the inlet port (6) of the microfluidic device (1).

17. The method of claim 16, wherein positioning the fluid dispenser's orifice comprises aligning the fluid dispenser's orifice with the inlet port of the microfluidic device, with the orifice facing the inlet port.

18. The method of claim 16 or any one of the above claims, comprising at least one of:
positioning the fluid dispenser's orifice such that there is a predefined gap between the fluid dispenser's orifice and the inlet port;
increasing the size of the droplet formed at the fluid dispenser's orifice until the droplet adheres both to the fluid dispenser's orifice and to the inlet port, thereby bridging the gap between the orifice and the inlet port.

19. The method of claim 16 or any one of the above claims, comprising at least one of:
forming a droplet of predefined size that adheres to the fluid dispenser's orifice;
moving the fluid dispenser's orifice towards the inlet port of the microfluidic device until the droplet adheres both to the fluid dispenser's orifice and to the inlet port, thereby bridging the gap between the orifice and the inlet port.

20. The method of claim 16 or any one of the above claims, comprising at least one of
rinsing the inlet port of the microfluidic device before establishing a fluidic contact between the droplet formed at the fluid dispenser's orifice and the inlet port of the microfluidic device;
flushing the fluid dispenser before dispensing another fluid;
monitoring an electrical property between an electrode located in the fluid dispenser and an electrode located in the microfluidic chip;
detecting when the droplet gets in contact with the inlet port of the microfluidic device;
applying at least one of a current and a voltage between the droplet and the fluid in the microfluidic device;
electrophoretically moving charged compounds from the droplet towards the inlet port of the microfluidic device.

21. A software program or product, preferably stored on a data carrier, for controlling or executing the method of claim 16 or any one of the above claims, when run on a data processing system such as a computer.

## Amended claims

### Amended claims in accordance with Rule 137(2) EPC.

**1.** A fluid supply unit comprising
a fluid dispenser (7) with an orifice (8) adapted for dispensing a fluid, and
a microfluidic device (1) comprising an inlet port located at one of the faces of the microfluidic device,
wherein the fluid supply unit is adapted for establishing a fluidic contact between a droplet (11) formed at the fluid dispenser's orifice (8) and an inlet port (6) of the microfluidic device (1), and
the fluid supply unit is adapted for electrophoretically moving charged compounds from the droplet towards the inlet port.

**2.** The fluid supply unit of claim 1, further comprising a positioning unit adapted for positioning the fluid dispenser's orifice relative to the inlet port of the microfluidic device.

**3.** The fluid supply unit of the preceding claim, wherein the positioning unit is adapted for aligning the fluid dispenser's orifice with the inlet port of the microfluidic device, with the orifice facing the inlet port.

**4.** The fluid supply unit of claim 2 or 3, wherein
the positioning unit is adapted for positioning the fluid dispenser's orifice such that there is a predefined gap between the fluid dispenser's orifice and the inlet port;

**5.** The fluid supply unit of claim 1 or any one of the above claims, wherein the microfluidic device comprises an inlet channel extending to one of the faces of the microfluidic device, thereby forming the inlet port,
with the dimensions of the inlet port corresponding to the dimensions of the inlet channel.

**6.** The fluid supply unit of claim 1 or any one of the above claims, wherein the fluid supply unit is adapted for at least one of
• increasing the size of the droplet formed at the fluid dispenser's orifice and
• repositioning the fluid dispenser's orifice relative to the inlet port of the microfluidic device
until the droplet adheres both and to the fluid dispenser's orifice and to the inlet port, thereby bridging a gap between the orifice and the inlet port.

**7.** The fluid supply unit of any one of the claims 4-6, further comprising at least one of the features:
the predefined gap between the fluid dispenser's orifice and the inlet port of the microfluidic device is in the range between 0.1 mm to 0.4 mm;
the fluid supply unit is adapted for increasing the size of the droplet formed at the fluid dispenser's orifice until the droplet adheres both to the fluid dispenser's orifice and to the inlet port, thereby bridging the gap between the orifice and the inlet port.

**8.** The fluid supply unit of claim 1 or any one of the above claims, further comprising at least one of the features:
the fluid supply unit is adapted for forming a droplet of predefined size that adheres to the fluid dispenser's orifice;
the positioning unit is adapted for moving the fluid dispenser's orifice towards the inlet port until the droplet adheres both to the fluid dispenser's orifice and to the inlet port, thereby bridging the gap between the orifice and the inlet port.

**9.** The fluid supply unit of claim 1 or any one of the above claims, comprising at least one of the features:
the microfluidic device comprises a first electrode electrically coupled with fluid in the microfluidic device;
the fluid dispenser comprises a second electrode electrically coupled with the droplet;
the fluid supply unit comprises a power supply adapted for applying at least one of a current and a voltage between the first electrode and the second electrode.

**10.** The fluid supply unit of claim 1 or any one of the above claims, wherein
the fluid supply unit comprises a detection unit adapted for determining when the droplet gets in contact with the inlet port of the microfluidic device.

**11.** The fluid supply unit of the preceding claim, wherein the detection preferably comprises at least one of:
• the detection unit is adapted for determining an electrical property measured between the droplet and fluid in the microfluidic device;
• the electrical property is one of: current, AC conductivity, DC conductivity, AC resistance, DC resistance;
• the detection unit is connected to an electrode located in the fluid dispenser and an electrode located in the microfluidic device;
• the detection unit is adapted for detecting an onset of current when the droplet gets in contact with the inlet port of the microfluidic device;
• operation of the fluid supply unit is controlled in dependence on the electrical property determined by the detection unit.

**12.** The fluid supply unit of claim 1 or any one of the above claims, comprising at least one of the features:
the fluid supply unit comprises a metering device fluidically coupled to the fluid dispenser, wherein preferably the metering device is adapted for supplying one or more of solvent, buffer solution, fluid sample to the fluid dispenser;
the fluid supply unit comprises a piston pump fluidically coupled to the fluid dispenser;
• the fluid supply unit comprises an auto sampling unit fluidically coupled to the fluid dispenser, wherein the auto sampling unit preferably comprises at least one of: the auto sampling unit is adapted for selecting one of a plurality of different fluids contained in respective fluid reservoirs, for aspirating a respective fluid from a fluid reservoir, and for supplying the respective fluid to the fluid dispenser,
• the fluids supplied by the auto sampling unit comprise one or more of: solvents, buffer solutions, fluid samples;
the fluid supply unit is adapted for flushing the fluid dispenser before dispensing another fluid.

**13.** The fluid supply unit of claim 1 or any one of the above claims, comprising at least one of the features:
the inlet port is located at a lateral surface of the microfluidic device;
the inlet port is located at a top surface of the microfluidic device;
the inlet port is realized as a throughhole extending from the top surface to the bottom surface of the microfluidic device, with the inlet channel being fluidically coupled to the throughhole;
the microfluidic device comprises a plurality of inlet ports.

**14.** The fluid supply unit of claim 1 or any one of the above claims, comprising at least one of the features:
the microfluidic device comprises a hydrophilic surface patch that surrounds the inlet port, with the droplet formed at the fluid dispenser's orifice being disposed to adhere to the hydrophilic surface patch;
the microfluidic device comprises a hydrophobic surface region that encloses the hydrophilic surface patch, with the droplet formed at the fluid dispenser's orifice not being disposed to adhere to the hydrophobic surface region;
at least one of the hydrophilic surface patch and the hydrophobic surface region is formed by subjecting a respective part of the microfluidic device's surface to a surface modification.

**15.** The fluid supply unit of claim 1 or any one of the above claims, comprising at least one of the features:
the microfluidic device is a microfluidic chip;
the microfluidic device comprises a separation system adapted for electrophoretically separating compounds of a fluid sample;
the microfluidic device is adapted for performing an isotachophoretic separation of a sample's compounds, with the fluid supply unit being capable of supplying different solutions;
the microfluidic device comprises an injection channel adapted for conveying a fluid from the inlet port to the separation system;
the microfluidic device is realized as a stack of microstructured layers;
the microfluidic device is made of one of: glass, plastic.

**16.** A method of supplying a fluid to a microfluidic device (1), the method comprising:
dispensing a fluid at an orifice (8) of a fluid dispenser (7), thereby forming a droplet (11) that adheres to the fluid dispenser's orifice (8);
positioning a fluid dispenser's orifice (8) relative to an inlet port (6) of a microfluidic device (1), wherein the orifice (8) faces the inlet port (6) and the orifice (8) is substantially aligned with the inlet port (6);
establishing a fluidic contact between the droplet (11) formed at the fluid dispenser's orifice (8) and the inlet port (6) of the microfluidic device (1), and
electrophoretically moving charged compounds from the droplet (11) towards the inlet port (6).

**17.** The method of the preceding claim, wherein positioning the fluid dispenser's orifice comprises aligning the fluid dispensers orifice with the inlet port of the microfluidic device, with the orifice facing the inlet port.

**18.** The method of claim 16 or any one of the above claims, comprising at least one of:
positioning the fluid dispenser's orifice such that there is a predefined gap between the fluid dispenser's orifice and the inlet port;
increasing the size of the droplet formed at the fluid dispenser's orifice until the droplet adheres both to the fluid dispenser's orifice and to the inlet port, thereby bridging the gap between the orifice and the inlet port.

**19.** The method of claim 16 or any one of the above claims, comprising at least one of:
forming a droplet of predefined size that adheres to the fluid dispenser's orifice;
moving the fluid dispenser's orifice towards the inlet port of the microfluidic device until the droplet adheres both to the fluid dispenser's orifice and to the inlet port, thereby bridging the gap between the orifice and the inlet port.

**20.** The method of claim 16 or any one of the above claims, comprising at least one of
rinsing the inlet port of the microfluidic device before establishing a fluidic contact between the droplet formed at the fluid dispenser's orifice and the inlet port of the microfluidic device;
flushing the fluid dispenser before dispensing another fluid;
monitoring an electrical property between an electrode located in the fluid dispenser and an electrode located in the microfluidic chip;
detecting when the droplet gets in contact with the inlet port of the microfluidic device;
applying at least one of a current and a voltage between the droplet and the fluid in the microfluidic device.

**21.** A software program or product, preferably stored on a data carrier, for controlling or executing the method of any one of the claims 16-20, when run on a data processing system such as a computer.
